# EUROPEAN PATENT APPLICATION

(11) **EP 3 121 797 A1**
(43) Date of publication of application: **25.01.2017**
(21) Application number: 16180707.8
(22) Date of filing: 22.07.2016
(51) Int. Cl.: G07G 1/00, G06Q 20/20

(54) **IMAGE RECOGNITION SYSTEM AND AN IMAGE-BASED SEARCH METHOD**

(30) Priority: 22.07.2015 JP 2015145095
(71) Applicant: Toshiba TEC Kabushiki Kaisha, Tokyo 141-0032 (JP)
(72) Inventor: NIMIYA, Shigeki, Shinagawa-ku, Tokyo 141-8562 (JP)
(74) Representative: Takeuchi, Maya

(57) **Abstract**

An image recognition system includes a data storage that stores, in association with each of a plurality of reference articles, a feature value calculated from an image of the reference article and a category group to which the reference article belongs, a camera configured to capture an image of an article to be identified, a display, and a processor. The processor is configured to calculate a feature value of the article to be identified, based on the captured image, determine a top candidate based on a similarity level between the feature value of the article to be identified and each of the feature values of the reference articles, select one or more reference articles that belong to a category group to which the top candidate belongs, as one or more candidates, and control the display to display one or more objects corresponding to the one or more candidates, respectively.

## Description

### FIELD

Embodiments described herein relate generally to an image recognition system and an image-based search method.

### BACKGROUND

There is a technique of identifying an article, by calculating feature data (feature value) of the article based on image data thereof and comparing the feature data with feature data of each of a plurality of reference articles stored in advance. Further, a store system of one type employs such a technique to identify merchandise to be purchased by a customer. The store system selects one or more reference articles that have similar feature data as feature data of the merchandise to be purchased, and displays, on a display thereof, the merchandise candidates.

However, the reference articles that have similar feature data may contain articles unrelated to the merchandise to be purchased simply because a shape thereof is similar to the merchandise to be purchased. It would be desirable to select and display the merchandise candidates, so that the operator can easily select one corresponding to the merchandise to be purchased.

### DESCRIPTION OF THE DRAWINGS

FIG. 1 is a perspective view of a check-out system according to an embodiment.
FIG. 2 is a block diagram illustrating a functional configuration of an information processing apparatus of the check-out system illustrated in FIG. 1.
FIG. 3 illustrates a data structure of a merchandise master stored in the information processing apparatus illustrated in FIG. 2.
FIG. 4 illustrates a data structure of a dictionary stored in the information processing apparatus illustrated in FIG. 2.
FIG. 5 is a block diagram illustrating a functional configuration of a POS terminal of the check-out system illustrated in FIG. 1.
FIG. 6 is a flow chart illustrating a process of associating the merchandise master and the dictionary.
FIG. 7 illustrates a screen for setting the merchandise master and the dictionary.
FIG. 8 is a block diagram illustrating a functional configuration of a control unit of the information processing apparatus.
FIG. 9 is a flow chart illustrating a flow of an object recognition process carried out by the information processing apparatus.
FIG. 10 illustrates a screen displayed when the information processing apparatus is in the process of the object recognition.
FIG. 11 illustrates an example of a category group screen that is displayed on an operator display unit.
FIG 12 is a flowchart illustrating a control process of a POS terminal of the check-out system.
FIG. 13 is a perspective view of a self-POS according to an embodiment.
FIG. 14 is a block diagram illustrating a functional configuration of the self-POS illustrated in FIG. 13.

### DETAILED DESCRIPTION

One or more embodiments provide an image recognition system and an image-based search method that enable appropriate selection and display of merchandise candidates on a screen.

In general, according to an embodiment, an image recognition system includes a data storage that stores, in association with each of a plurality of reference articles, a feature value calculated from an image of the reference article and a category group to which the reference article belong, a camera configured to capture an image of an article to be identified, a display, and a processor. The processor is configured to calculate a feature value of the article to be identified, based on the captured image, determine a top candidate based on a similarity level between the feature value of the article to be identified and each of the feature values of the reference articles, select one or more reference articles that belong to a category group to which the top candidate belongs, as one or more candidates, and control the display to display one or more objects corresponding to the one or more candidates, respectively.

Preferably, said one or more candidates include a first candidate that has a similarity level higher than a predetermined threshold and a second candidate that has a similarity level lower than the predetermined threshold, and a format of the object corresponding to the first candidate is different from a format of the object corresponding to the second candidate.

Preferably, the format includes at least one of a color of the object, a framing of the object, a font of texts in the object, filling of the object, and an attachment mark.

Preferably, a plurality of candidates are selected, and a plurality of objects displayed on the display is sorted in a descending order of similarity levels of the corresponding candidates.

Preferably, the data storage further stores, in association with each of the reference articles, a display position of an object corresponding to the reference article, and each of said one or more objects is displayed at a display position associated with the corresponding reference article.

Preferably, a plurality of tabs, each of which corresponding to a different category group, is also displayed on the display, and one of the tabs that corresponding to the category group to which the top candidate belongs is displayed differently from the other tabs.

The present invention further relates to an image-based search method of one or more candidates for an article to be identified. The method comprises: storing, in association with each of a plurality of reference articles, a feature value calculated from an image of the reference article and a category group to which the reference article belongs; calculating a feature value of an article to be identified, based on a captured image thereof; determining a top candidate based on a similarity level between the feature value of the article to be identified and each of the feature values of the reference articles; and selecting one or more reference articles that belong to a category group to which the top candidate belongs, as one or more candidates.

Preferably, the method further comprises: displaying, on a display, one or more objects corresponding to the one or more candidates, respectively.

Preferably, said one or more candidates include a first candidate that has a similarity level higher than a predetermined threshold and a second candidate that has a similarity level lower than the predetermined threshold, and a format of the object corresponding to the first candidate is different from a format of the object corresponding to the second candidate.

Preferably, the format includes at least one of a color of the object, a framing of the object, a font of texts in the object, filling of the object, and an attachment mark.

Preferably, a plurality of candidates are selected.

Preferably, a plurality of objects displayed on the display is sorted in a descending order of similarity levels of the corresponding candidates.

Preferably, the method further comprises: storing, in association with each of the reference articles, a display position of an object corresponding to the reference article, wherein each of said one or more objects is displayed at a display position associated with the corresponding reference article.

Preferably, the method further comprises: displaying, on the display, a plurality of tabs, each of which corresponding to a different category group, wherein one of the tabs that corresponding to the category group to which the top candidate belongs is displayed differently from the other tabs.

The present invention further relates to a non-transitory computer readable medium comprising a program that is executable in a computing device to cause the computing device to perform an image-based search method, the method comprising: storing, in association with each of a plurality of reference articles, a feature value calculated from an image of the reference article and a category group to which the reference article belongs; calculating a feature value of an article to be identified, based on a captured image thereof; determining a top candidate based on a similarity level between the feature value of the article to be identified and each of the feature values of the reference articles; and selecting one or more reference articles that belong to a category group to which the top candidate belongs, as one or more candidates.

Preferably, the method further comprises: displaying, on a display, one or more objects corresponding to the one or more candidates, respectively.

Preferably, said one or more candidates include a first candidate that has a similarity level higher than a predetermined threshold and a second candidate that has a similarity level lower than the predetermined threshold.

Preferably, a format of the object corresponding to the first candidate is different from a format of the object corresponding to the second candidate.

Preferably, the format includes at least one of a color of the object, a framing of the object, a font of texts in the object, filling of the object, and an attachment mark.

Preferably, a plurality of candidates are selected, and a plurality of objects displayed on the display is sorted in a descending order of similarity levels of the corresponding candidates.

Preferably, the method further comprises: storing, in association with each of the reference articles, a display position of an object corresponding to the reference article.

Preferably, each of said one or more objects is displayed at a display position associated with the corresponding reference article.

Preferably, the method further comprises:
displaying, on the display, a plurality of tabs, each of which corresponding to a different category group.

Preferably, one of the tabs that corresponding to the category group to which the top candidate belongs is displayed differently from the other tabs.

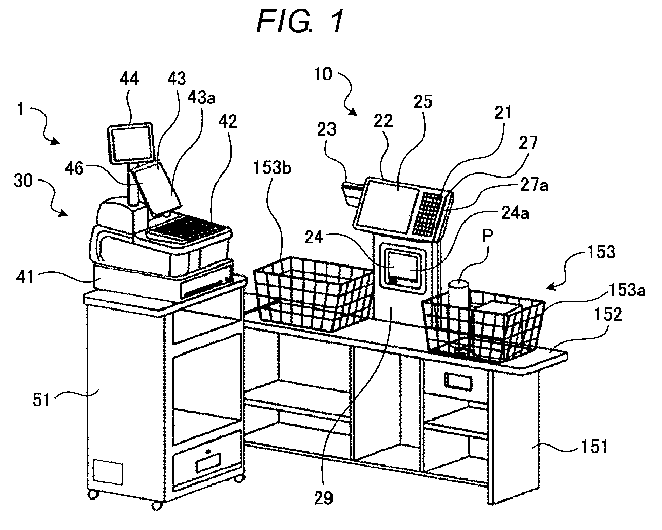

Hereinafter, an information processing apparatus (image recognition system) and a program according to an embodiment will be described in detail, as non-limiting examples, with reference to FIG. 1 to FIG. 14. In the present embodiment, a merchandise reader will be described as an example of the information processing apparatus (image recognition system). Further, merchandise will be described as an example of an article to be processed by the merchandise reader. However, the present disclosure is not limited to the embodiment described below.

FIG. 1 is a perspective view of a check-out system 1. The check-out system 1 is provided in a supermarket, a convenience store, or the like, receives merchandise information on merchandise to be sold, and performs purchase registration and payment processing for the merchandise. As illustrated in FIG. 1, the check-out system 1 includes a merchandise reader 10 and a POS terminal 30.

The merchandise reader 10, which is connected to the POS terminal 30 so as to enable data communication with the POS terminal 30, is placed on an oblong counter table 151. The merchandise reader 10 includes a housing 29 having a shape of a thin rectangular plate.

A reading window 24a of an image capturing unit 24 is formed on a front side of the housing 29. Operator display units 22, 23, an operation unit 21, and a card reader 27 having a groove 27a are provided on the top of the housing 29. A touch panel 25 is provided on the operator display unit 22. The operation unit 21 has a provisional closing key 211 to trigger an end of one checkout process through the merchandise reader 10.

A load receiving surface 152 is formed on the upper surface of the counter table 151. A shopping bag 153 containing merchandise P is placed on the load receiving surface 152. Specifically, the shopping bag 153 includes a first shopping bag 153a that is brought by a customer, and a second shopping bag 153b that is placed in a position facing the first shopping bag 153 across the merchandise reader 10.

The merchandise P to be purchased by a customer is placed in the first shopping bag 153a. An operator operating the merchandise reader 10 takes out and moves the merchandise P in the first shopping bag 153a into the second shopping bag 153b.

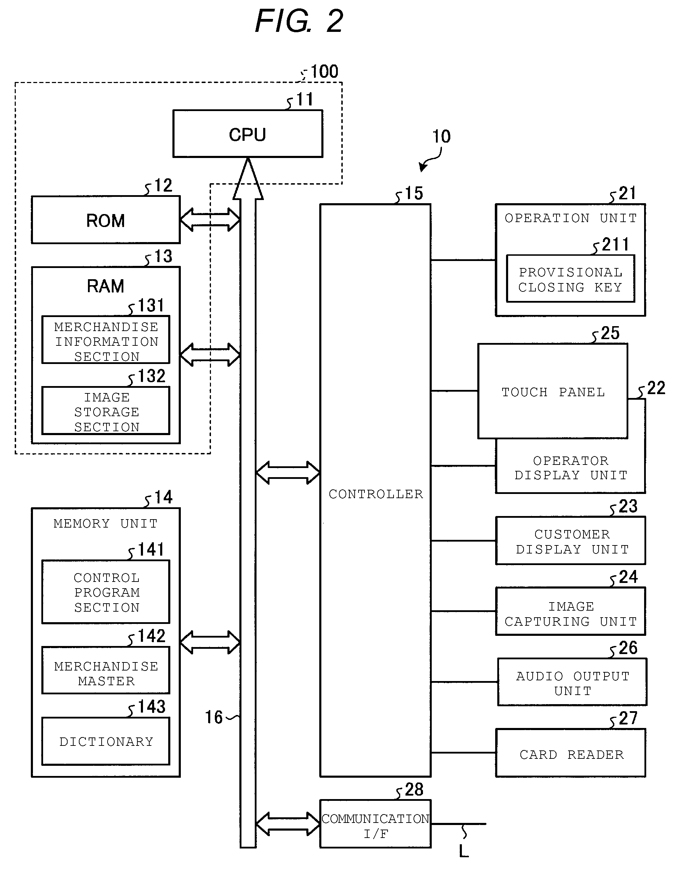

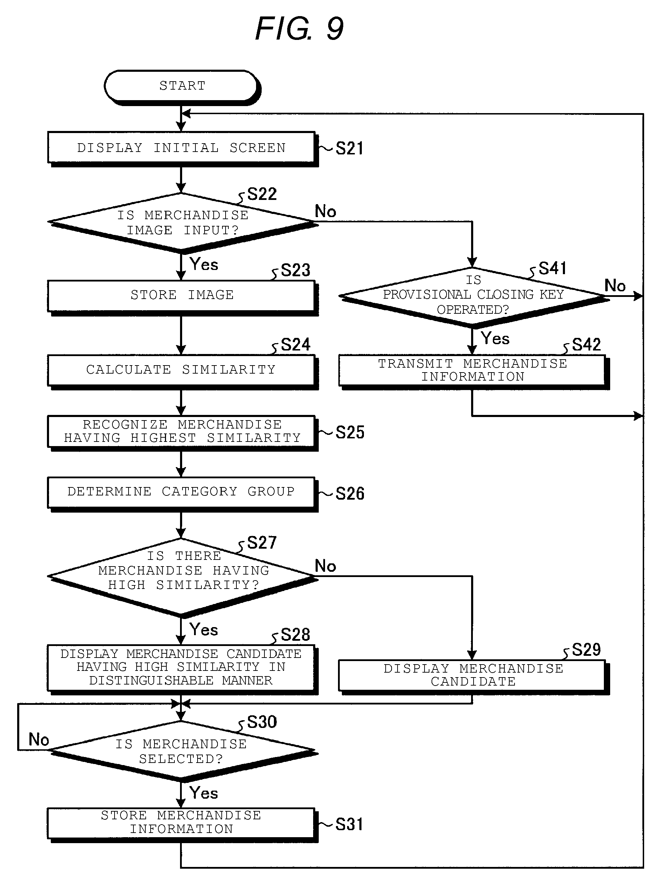

In this move process, the merchandise P passes through the front of the reading window 24a of the merchandise reader 10. At this time, the merchandise reader 10 captures an image of the merchandise P by using the image capturing unit 24 (see FIG. 2) disposed behind the reading window 24a. The merchandise reader 10 executes object recognition, based on feature data (feature value) of the captured merchandise image and the feature data of a plurality of reference merchandise (reference articles) images that are stored in advance, and selects one or more merchandise candidates corresponding to the captured merchandise. With respect to the generic object recognition, various recognition techniques are known. In addition, a specific process of the object recognition will be described with reference to FIG. 9 below.

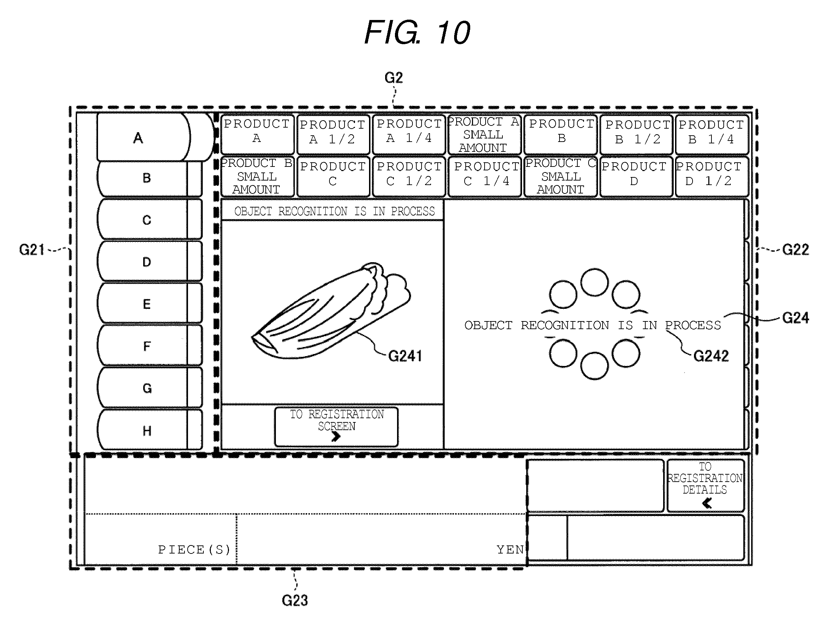

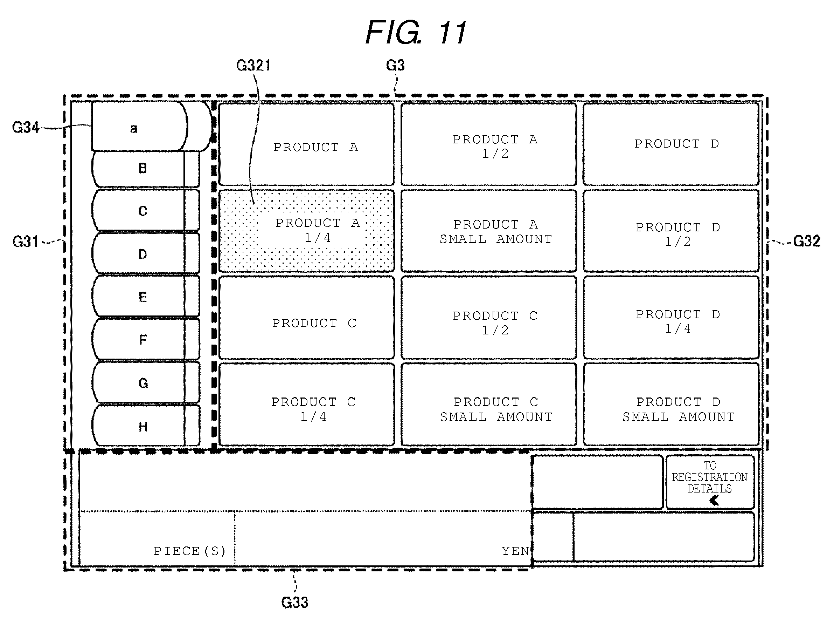

The merchandise reader 10 displays preset keys on which merchandise names are displayed, and with which the displayed merchandise can be selected (see FIG. 10), and preset keys each of which indicates one of merchandise candidates selected through the object recognition (see FIG. 11), on the operator display unit 22. The operator selects one of merchandise from the displayed merchandise and merchandise candidates, by operating the touch panel 25. The merchandise reader 10 executes a purchase registration process of the selected merchandise. The purchase registration process refers to a process of displaying the merchandise name and the unit price (merchandise information) of the selected merchandise, based on merchandise information thereof, and storing the merchandise information in a buffer. The operator repeats this operation for all merchandise P in the first shopping bag 153a, and then operates the provisional closing key 211. Then, the merchandise reader 10 transmits the merchandise information of all merchandise that was subjected to the purchase registration process, to the POS terminal 30.

The POS terminal 30 executes a payment process of the merchandise, based on the merchandise information received from the merchandise reader 10. The payment process refers to a process of displaying a total amount of the transaction, based on the received merchandise information and the deposit that the customer deposits. Specifically, the payment process refers to a process of calculating and displaying a change, a process of instructing the change machine to dispense a change, and a process of issuing a receipt having merchandise information and payment information (a total amount, a deposit amount, a change amount, and the like) printed thereon. In addition, a process in which the purchase registration process and the payment process are combined is referred to as a transaction process. In addition, information subjected to the transaction process is referred to as purchase information.

The POS terminal 30 is placed on the upper surface of a drawer 41 placed on a check-out table 51 that forms an L-shape table with the counter table 151. The drawer 41 accommodates cash (bills and coins) received from the customer in a cash box thereof. The change to be handed to the customer is withdrawn from the cash box of the drawer 41. When a command to open the drawer is received from the POS terminal 30, the drawer 41 opens the cash box.

An operation unit 42 that is pressed by the operator (salesperson, or the like) is placed on the upper surface of the POS terminal 30. An operator display unit 43 that displays information is provided farther from the operator than the operation unit 42. The operator display unit 43 displays information for the operator. The touch panel 46 is formed on the display surface 43a of the operator display unit 43. The customer display unit 44 is rotatably provided at a position farther from the operator than the operator display unit 43. The customer display unit 44 displays information for the customer.

Subsequently, a functional configuration of the merchandise reader 10 will be described, with reference to FIG. 2. As illustrated in FIG. 2, the merchandise reader 10 includes a central processing unit (CPU) 11 as a main control unit. Further, the merchandise reader 10 includes a read only memory (ROM) 12 that stores various programs. The merchandise reader 10 includes a random access memory (RAM) 13 functioning as a work area of the CPU 11. Further, the merchandise reader 10 includes a memory unit 14, and the like including a HDD that stores various programs, a flash memory, or the like. The CPU 11, the ROM 12, the RAM 13, and the memory unit 14 are connected to each other through a data bus 16.

The CPU 11, the ROM 12, and the RAM 13 form a control unit 100. The control unit 100 performs a control process, by the CPU 11 operating according to the control program that is stored in the control program section 141 of the memory unit 14 and developed therefrom to the RAM 13.

The RAM 13 stores various data. The RAM 13 includes a merchandise information section 131 and an image storage section 132. The merchandise information section 131 stores merchandise information of the merchandise that is registered through the purchase registration process. The image storage section 132 stores a merchandise image captured by the image capturing unit 24.

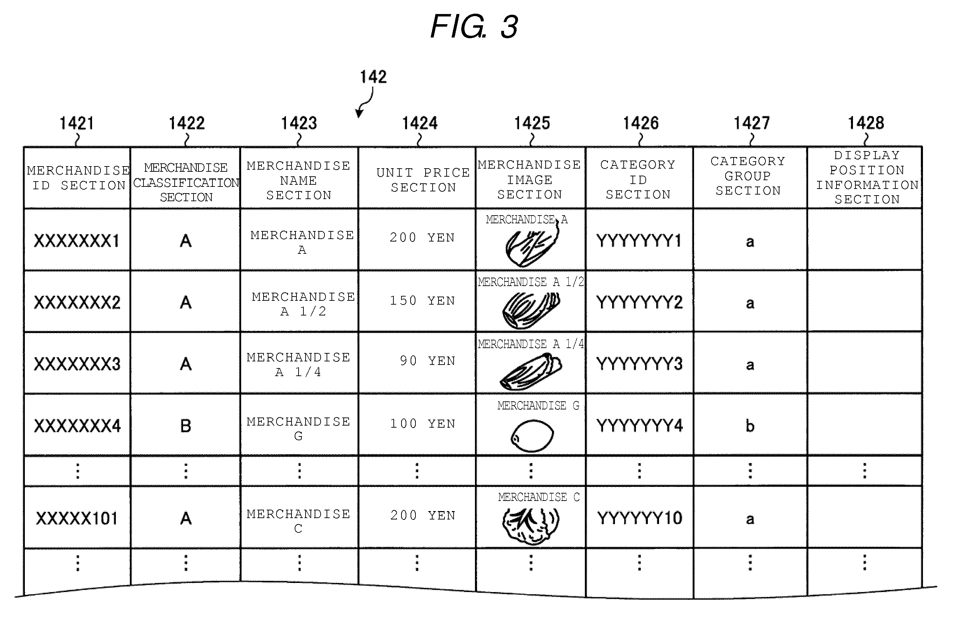

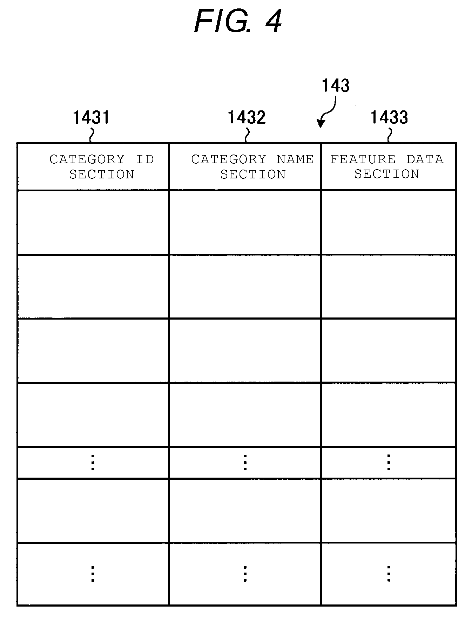

The memory unit 14 includes a control program section 141, a merchandise master 142, and a dictionary 143. The control program section 141 stores a program to control the merchandise reader 10. The merchandise master 142 (illustrated in FIG. 3) stores various information on merchandise for each unit of merchandise. The dictionary 143 (illustrated in FIG. 4) stores feature data indicating a feature of merchandise, or the like.

The operation unit 21, the operator display unit 22, the customer display unit 23, the image capturing unit 24, the touch panel 25, the audio output unit 26, and the card reader 27 are connected to the control unit 100 through the controller 15 and the data bus 16. Further, the communication interface (I/F) 28 is connected to the control unit 100 through the data bus 16, and the communication I/F 28 is connected to the POS terminal 30 through a communication line L.

The image capturing unit 24 functioning as the image capturing unit is a color CCD sensor, a color CMOS sensor, or the like, captures an image of the merchandise that passes in front of the reading window 24a. The audio output unit 26 includes an audio circuit and a speaker or the like that generate preset warning sound or the like. The audio output unit 26 generates an audio signal such as warning sound under the control of the control unit 100. The card reader 27 reads card information from the card that is swiped along the groove 27a.

The data structure of the merchandise master 142 is illustrated in FIG. 3. The merchandise master 142 stores merchandise information (a merchandise classification, a merchandise name, a unit price, a merchandise image, a category ID, a category group, display position information, and the like) of merchandise in correlation with a merchandise identification (ID) of the merchandise. As illustrated in FIG. 3, the merchandise master 142 includes a merchandise ID section 1421, a merchandise classification section 1422, a merchandise name section 1423, a unit price section 1424, a merchandise image section 1425, a category ID section 1426, a category group section 1427, and display position information section 1428.

The merchandise ID section 1421 stores a merchandise ID of merchandise. The merchandise classification section 1422 stores a higher-level classification to which the merchandise specified by the merchandise ID belongs. The merchandise name section 1423 stores the merchandise name of the merchandise specified by the merchandise ID. The unit price section 1424 stores the unit price of the merchandise specified by the merchandise ID. The merchandise image section 1425 stores the image of the merchandise specified by the merchandise ID. The category ID section 1426 stores a merchandise code of the merchandise used in a dictionary 143 (See FIG. 4), with respect to the merchandise specified by the merchandise ID.

The category group section 1427 stores category group information about a group of merchandise (for example, a subordinate concept of the classification stored in the merchandise classification section 1422). For example, leafy vegetables correspond to the category group information of "a".

The display position information section 1428 stores the position information (for example, coordinate information) of a display position (preset key) on the operator display unit 22, of the merchandise specified by the merchandise ID. The preset key of each merchandise is displayed in the position on the operator display unit 22, which is determined based on the display position information stored in the display position information section 1428. In other words, the preset key of the same merchandise is always displayed at the same position on the operator display unit 22, even when the similarity, that is calculated every time the object recognition is performed, is changed.

FIG. 4 illustrates the dictionary 143 that stores feature data indicating the feature of merchandise for each merchandise. In FIG. 4, the dictionary 143 includes a category ID section 1431, a category name section 1432, and a feature data section 1433. The category ID section 1431 stores a merchandise code (the same code as the category ID section 1426) of merchandise. The category name section 1432 stores a category name (the same merchandise name as in the merchandise name section 1423) of the merchandise specified by the category ID. The feature data section 1433 stores feature data indicating the feature of reference merchandise specified by the merchandise ID. The feature data are information indicating the feature of merchandise such as hue, surface pattern, roughness, and a shape of the merchandise. The reference merchandise refers to merchandise having hue, surface pattern, roughness, and shape, which are representative of the corresponding merchandise.

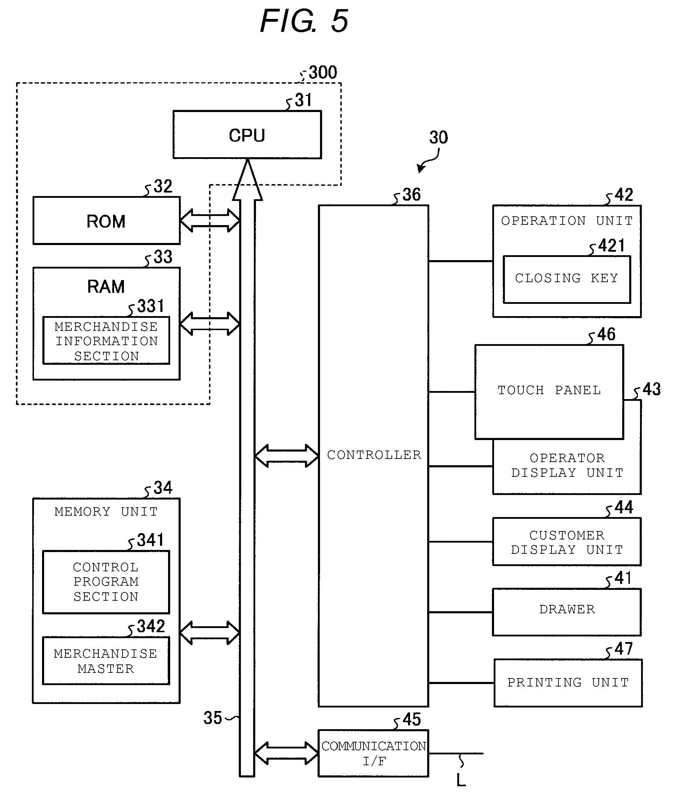

Subsequently, a functional configuration of the POS terminal 30 will be described with reference to a block diagram illustrated in FIG. 5. As illustrated in FIG. 5, the POS terminal 30 includes a CPU 31 as a main control unit. Further, the POS terminal 30 includes a ROM 32 storing various programs. Further, the POS terminal 30 includes a RAM 33 functioning as a work area of the CPU 31. Further, the POS terminal 30 includes a memory unit 34 including an HDD, a flash memory, and the like, which store various programs. The CPU 31, the ROM 32, the RAM 33, and the memory unit 34 are connected to each other through a data bus 35.

The CPU 31, the ROM 32, and the RAM 33 configure a control unit 300. The control unit 300 performs a control process, by the CPU 31 operating according to the control program that is stored in the control program section 341 of the memory unit 34 and developed therefrom into the RAM 33.

The RAM 33 stores various data. The RAM 33 includes a merchandise information section 331. The merchandise information section 331 stores the merchandise information that is received from the merchandise reader 10. Further, the merchandise information section 331 stores the merchandise information of the merchandise that was subjected to the purchase registration process by the POS terminal 30.

The memory unit 34 includes a control program section 341 and a merchandise master 342. The control program section 341 stores a program to control the POS terminal 30. The merchandise master 342 has a same configuration as the merchandise master 142 of the merchandise reader 10. Since the POS terminal 30 may execute the purchase registration process for added merchandise, and a return process, the POS terminal 30 stores the merchandise master 342.

The operation unit 42 with the closing key 421, the operator display unit 43, the customer display unit 44, the touch panel 46, the drawer 41, and the printing unit 47 are connected to the control unit 300 through the controller 36 and the data bus 35. Further, the communication I/F 45 is connected to the control unit 300 through the data bus 35, and the communication I/F 45 is connected to the merchandise reader 10 through a communication line L.

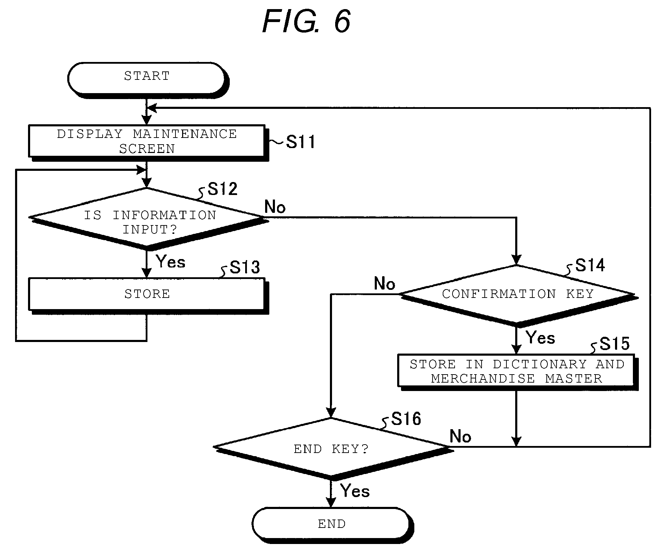

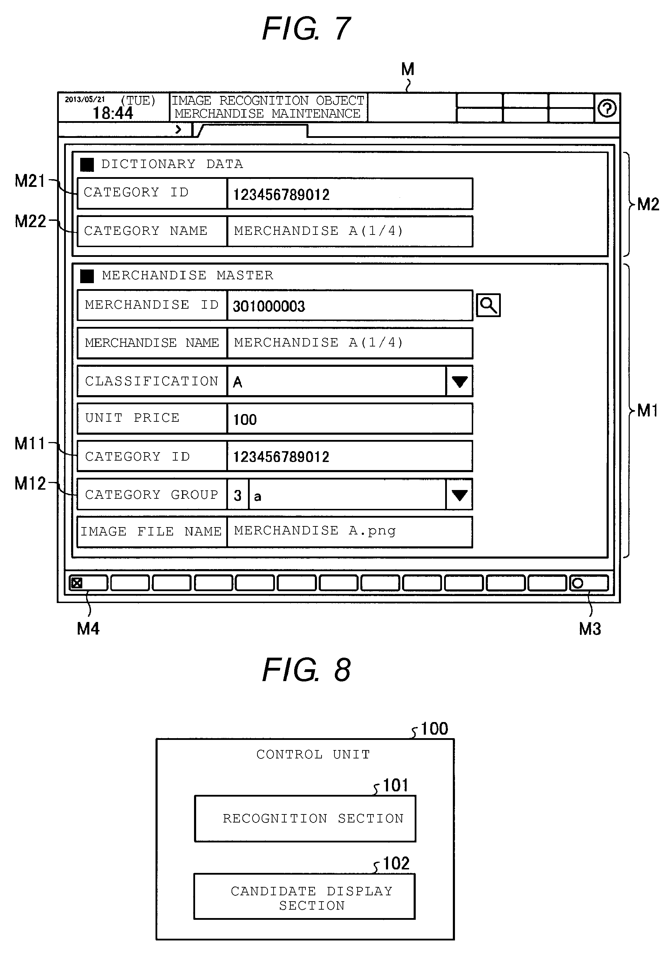

Subsequently, an association process between the merchandise master 142 and the dictionary 143, which is one of the control processes of the merchandise reader 10, will be described with reference to FIG. 6 and FIG. 7. FIG. 6 is a flowchart illustrating a flow of the association process between the merchandise master 142 and the dictionary 143. In FIG. 6, when a maintenance process for associating the merchandise master 142 with the dictionary 143 is instructed, the control unit 100 displays a maintenance screen M (S11).

FIG. 7 is an example of the maintenance screen M displayed in S11. The maintenance screen M is displayed, for example, on the operator display unit 22 of the merchandise reader 10, and an operator inputs information in a predetermined position of the maintenance screen M displayed on the operator display unit 22, using the operation unit 21 and the touch panel 25. The maintenance screen M includes a merchandise master section M1 to input the merchandise information stored in the merchandise master 142, and dictionary section M2 that indicates the merchandise information stored in the dictionary 143.

The merchandise master section M1 includes a merchandise ID section to input a merchandise ID, a merchandise name section to input a merchandise name, a classification section to input a classification of merchandise, a unit price section to input a unit price of the merchandise, and the like. Further, the merchandise master section M1 includes a category ID section M11 to input a category ID of the merchandise, and a category group input section M12 to input the category group of the merchandise.

The dictionary section M2 includes a category ID section M21 to input a category ID (the same category ID as the category ID section M11) of the merchandise, a category name section M22 to input the category name of the merchandise, and the like.

Further, the maintenance screen M displays a confirmation key M3 to confirm an input for maintenance, and an end key M4 to end the maintenance process.

A description about FIG. 6 will follow below. Next, the control unit 100 determines whether or not various information including the category ID and the category group is input by the operator (S12). When it is determined that the information is input (Yes at S12), the control unit 100 stores the information in the RAM 13 (S13). The process returns to S12.

In contrast, when it is determined that the information is not input (No at S12), the control unit 100 determines whether or not the confirmation key M3 is operated by the operator (S14). When it is determined that the confirmation key M3 is operated (Yes at S14), the control unit 100 stores the information stored in S13, in the merchandise master 142 and the dictionary 143 (S15). In this case, since the same category ID is stored in the merchandise master 142 and the dictionary 143, the merchandise stored in the merchandise master 142 and the merchandise stored in the dictionary 143 are associated with each other based on the category ID. Then, the process returns to S11.

Further, when it is determined that the confirmation key M3 is not operated (No at S14), the control unit 100 determines whether or not the end key M4 is operated by the operator (S16). When it is determined that the confirmation key M3 is operated (Yes at S16), the control unit 100 completes the maintenance process for one piece of merchandise. In addition, when it is determined that the end key M4 is not operated in S16 (No at S16), the process returns to S11. In other words, when the maintenance process for other pieces of merchandise is continuously executed, the operator performs a new input using the maintenance screen M. The control unit 100 executes again the processes of S11 to S16.

In this manner, since the merchandise ID and the information on the category group are input through the maintenance screen M, the merchandise stored in the merchandise master 142 and the merchandise stored in the dictionary 143 are associated with each other based on the input category ID. Further, the merchandise and the category group to which the merchandise belongs are associated with each other.

Subsequently, a merchandise candidate display process, which is one of the control processes of the merchandise reader 10, will be described with reference to FIG. 8 to FIG. 11. FIG. 8 is a block diagram illustrating a functional configuration of the control unit 100. The control unit 100 functions as a recognition section 101 and a candidate display section 102, according to the control program stored in the control program section 141 of the memory unit 14.

The recognition section 101 has a function of recognizing merchandise having most similar feature to the captured merchandise, from reference merchandise, based on a merchandise image captured by the image capturing unit 24.

The candidate display section 102 has a function of extracting all merchandise included in a category group to which the merchandise recognized by the recognition section 101 belongs, from the merchandise master 142, and displaying the extracted merchandise as the merchandise candidates of the captured merchandise.

FIG. 9 is a flow chart illustrating a flow of the merchandise candidate display process, including the generic object recognition process, that the merchandise reader 10 executes. The control unit 100 displays an initial screen of a standby state on the operator display unit 22 (S21).

Next, the control unit 100 determines whether or not the merchandise image captured by the image capturing unit 24 is input (S22). When it is determined that the image is input (Yes at S22), the control unit 100 stores the input image in the image storage section 132 (S23). The control unit 100 calculates a similarity by comparing the feature data of the stored image with the feature data of each reference merchandise which are stored in the feature data section 1433 of the dictionary 143 (S24).

Specifically, the control unit 100 first extracts the state of the surface (hue, surface pattern, and roughness of the surface), the shape, and the like of the merchandise P as feature data, from the captured image stored in the first image storage section 132. Next, the control unit 100 compares the extracted feature data with the feature data of each reference merchandise stored in the feature data section 1433. The control unit 100 calculates the similarity of each reference merchandise with respect to the captured merchandise P, based on comparison of the feature data.

Here, the similarity is a value indicating similarity between the feature data of the merchandise P and the feature data of the merchandise stored in the feature data section 1433. However, the similarity is not limited thereto, and the similarity may be a value indicating a degree of matching between the feature data of the merchandise P and the feature data of the merchandise stored in the feature data section 1433, or a value indicating a degree of correlation between the feature data of the merchandise P and the feature data of each piece of merchandise stored in the feature data section 1433.

FIG. 10 illustrates an example of a display screen G2 during a process of calculating the similarity, based on the feature data of the stored image and the feature data of each piece of merchandise stored in the feature data section 1433. As shown in FIG. 10, the display screen G2 includes a classification section G21, a preset key section G22, and a payment section G23. The classification section G includes tabs in which classification names of merchandise are displayed. The preset key section G22 includes a plurality of preset keys, in which merchandise names are displayed, so that a selection of merchandise belonging to classification of the present tab can be made. In the present embodiment, the plurality of preset keys indicating merchandise names of merchandise classified as "vegetables" are displayed in the preset key section G22. For example, when a tab of "fruits" is selected, a plurality of preset keys indicating merchandise names of merchandise belonging to "fruits" are displayed in the preset key section G22. The number and the total amount of selected merchandise are displayed in the payment section G23.

Further, on the display screen G2, a pop-up G24 indicating that object recognition and similarity calculation are in the process is displayed in the preset key section G22. The pop-up G24 includes an image (frame image) G241 which has been captured by the image capturing unit 24 and stored in S23, and a character G242 of "object recognition is in the process...," which indicates that the object recognition for the image G241 is in the process.

Description about FIG. 9 will follow below. Next, the control unit 100 (recognition section 101) recognizes one kind of merchandise having the highest similarity (S25). The control unit 100 extracts the category ID of the merchandise having the highest similarity in the feature data section 1433, from the category ID section 1431. Then, the control unit 100 extracts the same category ID as the extracted category ID, from the category ID section 1426 of the merchandise master 142. The control unit 100 determines the category group stored in the category group section 1427 in correlation with the extracted category ID as the category group of the merchandise (S26). In the present embodiment, the control unit 100 calculates the similarity by comparing the image of the "Merchandise A 1/4 cut" (for example, "Chinese cabbage 1/4 cut") captured by the image capturing unit 24 with the feature data stored in the feature data section 1433 of the dictionary 143 and determines a category group "a" as the category group of the merchandise.

Alternatively, for the comparison of the feature data when determining the category group in S26, it is possible to set accuracy of the similarity calculation to a low level. For example, the control unit 100 may be configured not to extract feature data of the merchandise, but to extract feature data focusing on a particular characteristic of the merchandise, from the merchandise image captured by the image capturing unit 24, and compare the extracted feature data with the feature data stored in the feature data section 1433 of the dictionary 143. In the example described above, the similarity is calculated by extracting the feature data of "Merchandise A" which is one feature of "Merchandise A 1/4 cut" and comparing the extracted feature data with the feature data stored in the feature data section 1433. Then, merchandise having the highest similarity is recognized, and the category group to which the recognized merchandise belongs is determined. "Merchandise A 1/4 cut" is likely to be included in the category group determined in this manner. As a result, it is possible to set the "Merchandise A 1/4 cut" as a merchandise candidate with accuracy.

Next, the control unit 100 determines whether there is merchandise having high similarity (for example, similarity 90% or more), with respect to all the merchandise belonging to the category group that is determined in S26 (S27). When there is merchandise having that high similarity (Yes at S27), the control unit 100 (candidate display unit 102) displays the preset key of all merchandise belonging to the category group on the operator display unit 22, as merchandise candidates, in a visually distinguishable manner than other merchandise candidates (S28). In this case, the control unit 100 displays the preset key in the determined position, according to the display position information stored in the display position information section 1428. Further, when there is no merchandise having that high similarity (No at S27), the control unit 100 (candidate display unit 102) displays all the merchandise belonging to the category group on the operator display unit 22, as merchandise candidates (S29). In this case, the control unit 100 displays the preset key in the determined position, according to the display position information stored in the display position information section 1428.

FIG. 11 illustrates a display screen G3 including the merchandise candidates, displayed in S28. In FIG. 11, the classification section G31 and the payment section G33 in the display screen G3 are respectively the same as the classification section G21 and the payment section G23. Further, in FIG. 11, the preset keys G32 of all merchandise belonging to the extracted category group are displayed in the display screen G3. The merchandise name of the corresponding merchandise is displayed on each preset key G32. In the present embodiment, for example, the merchandise name of "Merchandise A 1/4" is displayed in a preset key G321.

Further, the classification section G31 includes a tab G34 indicating the category group name of the determined category group. In the present embodiment, the tab indicating the category group name "a" is displayed. The preset keys G32 of the merchandise candidates are displayed in correlation with the tab G34, which includes 12 kinds of merchandise belonging to the category group "a" as the merchandise candidates. Since the display position of the preset key G32 of each merchandise candidate is fixed based on the position information that is stored in the display position information section 1428 of the merchandise master 142, each of the preset keys G32 is displayed always at the same position. Therefore, once the operator learns the position of the preset key, it is possible to operate the corresponding preset key with less difficulty. When a preset key G32 is operated by the operator selecting a position of the touch panel 25 corresponding to the display position of the preset key G32, merchandise corresponding to the operated preset key G32 is selected from the merchandise candidates.

Further, in the present embodiment, with respect to the preset key G321 including "Merchandise A 1/4", the display color of the key is different from the other preset keys G32. This is because when "Merchandise A 1/4" calculated in S24 is determined to have the high similarity (for example, similarity 90% or more) in S27. As a method of displaying the merchandise having the high similarity in a visually distinguishing manner from other merchandise, there are following methods in addition to varying the color of the preset key. For example, there are a method of reversing and displaying the character of the preset key G32, a method of shading and displaying the preset key G32, a method of displaying a frame on the preset key G32, and a method of displaying a special mark on the preset key G32, and the like. By displaying in this way, the operator can recognize that the merchandise corresponding to the preset key G32 has a high similarity at a glance, even when a plurality of preset keys G32 is displayed.

In addition, although the preset keys of the merchandise candidates are displayed in the predetermined position in S28 and S29 in the present embodiment, the preset keys of the merchandise candidates may be displayed in parallel in a descending order of similarities that have been calculated in S17. Thus, the press key of the merchandise having the highest similarity is always displayed in an upper left position, and the press key of the merchandise having the lowest similarity is displayed in a lower right position. Therefore, the operator is more likely to find the preset key of the corresponding merchandise, by looking at the upper left position of the displayed preset keys G32. Such display is effective for a particular operator having less operation experience of merchandise reader 10.

Description about FIG. 9 will follow below. After displaying the merchandise candidates in S28 or S29, the control unit 100 determines whether or not one kind of merchandise is selected from the displayed merchandise candidates by the operator (S30). When the control unit 100 is on standby until the merchandise is selected (No at S30). When it is determined that the merchandise is selected (Yes at S30), the control unit 100 performs a purchase registration process on the selected merchandise. In other words, the control unit 100 extracts merchandise information (a merchandise name, a unit price, and the like) of the selected merchandise from the merchandise master 142, and stores the extracted merchandise information in the merchandise information section 131 (S31). Then, the process returns to S21. The control unit 100 performs S22 to S31 every time a new merchandise image is input, and stores the merchandise information in the merchandise information section 131.

Meanwhile, in S22, when it is determined that the merchandise image is not input (No at S22), then, the control unit 100 determines whether or not the provisional closing key 211 is operated (S41). When it is determined that the provisional closing key 211 is operated (Yes at S41), the control unit 100 transmits the merchandise information stored in the merchandise information section 131, to the POS terminal 30 through the communication line L (S42). Then, the process returns to S21. In addition, when it is determined that the provisional closing key 211 is not operated (No at S41), the process returns to S21.

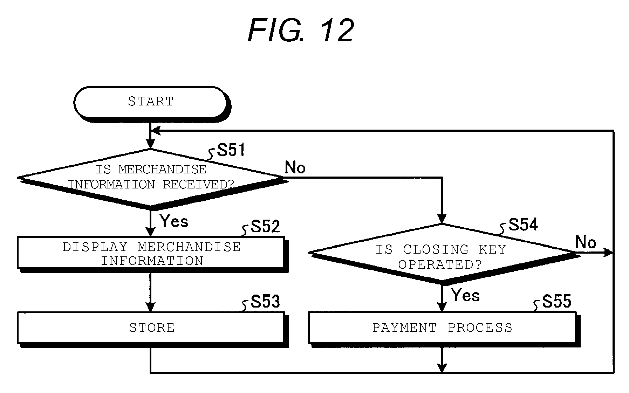

Next, a process that the control unit 300 of the POS terminal 30 executes will be described with reference to FIG. 12. The control unit 300 determines whether or not the merchandise information transmitted by the merchandise reader 10 in S42 is received (S51). When it is determined that the merchandise information is received (Yes at S51), the control unit 300 displays the received merchandise information on the operator display unit 43 and the customer display unit 44 (S52). Further, the control unit 300 stores the received merchandise information in the merchandise information section 331 (S53). Then, the process returns to S51.

When it is determined that the merchandise information is not received (No at S51), the control unit 300 determines whether or not the closing key 421 is operated (S54). When it is determined that the closing key 421 is operated (Yes at S54), the control unit 300 performs a payment process based on the merchandise information stored in the merchandise information section 331 (S55). Then, the process returns to S51. When it is determined that the closing key 421 is not operated (No at S54), the process returns to S51. Thus, the POS terminal 30 ends the payment process.

According to the above embodiment, the merchandise reader 10 extracts merchandise having the highest similarity, based on the feature data of the merchandise of which image has been captured by the image capturing unit 24 and the feature data stored in the dictionary 143, and displays the preset keys for all merchandise included in the category group to which the merchandise belongs as merchandise candidates on the operator display unit 22. When a plurality of merchandise candidates is displayed, all candidates are displayed by reducing the size of each preset key, or all candidates are displayed using a screen scroll. Therefore, it is possible to reliably display the merchandise candidates on the operator display unit 22.

Although the merchandise reader 10 is described above as an example of the information processing apparatus, the POS terminal 30 may server as the information processing apparatus.

Further, although the dictionary 143 are stored in the merchandise reader 10 in the above embodiment, the dictionary may be stored in the POS terminal 30 and the object recognition process may be executed using the dictionary stored in the POS terminal 30.

Further, although both the merchandise reader 10 and the POS terminal 30 store the merchandise masters in the above embodiment, only the POS terminal 30 may store the merchandise master.

Further, although the merchandise reader 10 executes the object recognition process and similarity calculation process in the above embodiment, the POS terminal 30 may execute all or some of these processes.

Further, although merchandise is described above as an example of an article, the article may be, for example, an article that is not sold in a store.

In addition, although the merchandise reader 10 is described above as an example of the information processing apparatus, in the check-out system 1 including the POS terminal 30 and the merchandise reader 10, without being limited thereto, the information processing apparatus may be a single apparatus having functions of the POS terminal 30 and the merchandise reader 10. Examples of the single apparatus having functions of the POS terminal 30 and the merchandise reader 10 include, for example, a self-checkout apparatus (hereinafter, simply referred to as a self-POS) that is provided and used in a store such as a supermarket.

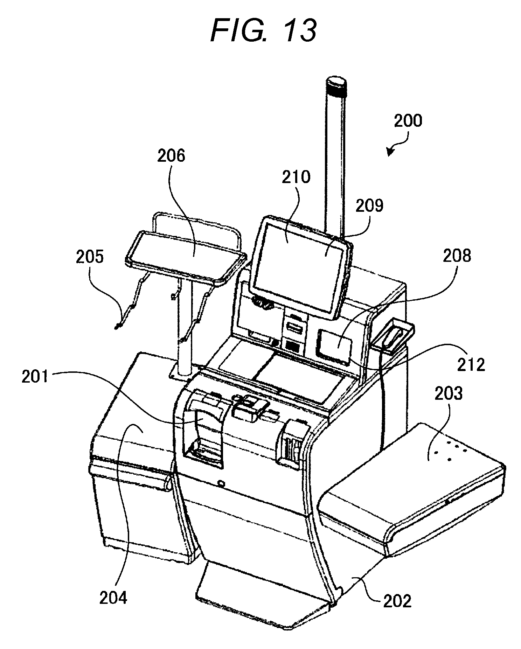

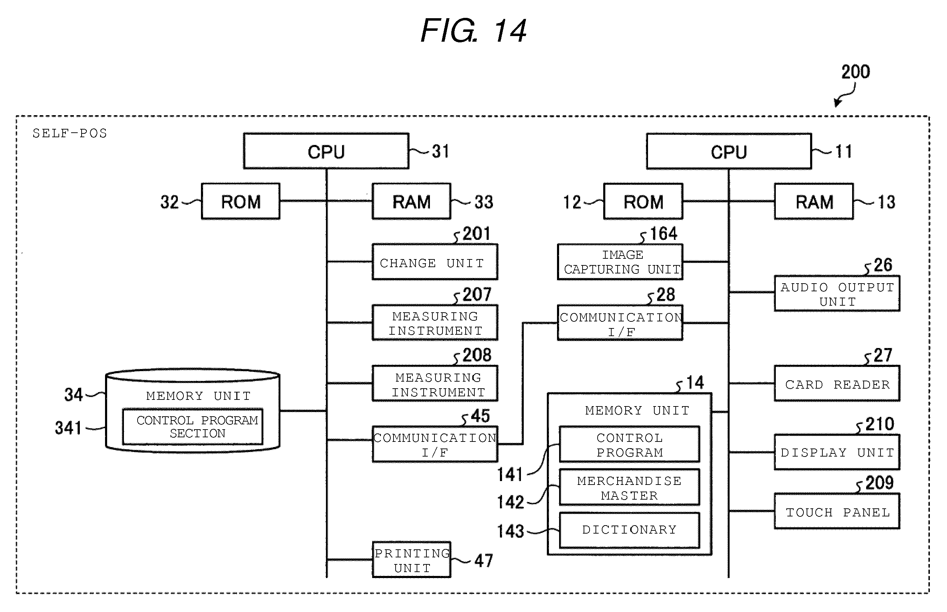

Here, FIG. 13 is a perspective view of a self-POS 200, and FIG. 14 is a block diagram illustrating a functional configuration of the self-POS 200. In the following, since the same reference numerals are given to the same elements as those in FIG. 1, FIG. 2 and FIG. 5, a detailed description thereof will be omitted.

As illustrated in FIG. 13 and FIG. 14, the main body 202 of the self-POS 200 includes a display unit 210 with a touch panel 209 disposed on the surface thereof, and a merchandise reading unit 212 that reads a merchandise image in order to recognize (extract) merchandise.

For example, a liquid crystal display device is used as the display unit 210. The display unit 210 displays a guide screen to inform a customer of how to operate the self-POS 200, various input screens, a registration screen that displays the merchandise information read by the merchandise reading unit 212, and a checkout screen that displays a total amount of merchandise, a deposit amount, a change amount, and the like, and allows to select a payment method.

The merchandise reading unit 212 reads a merchandise image using an image capturing unit 164, when the customer places a code symbol attached to the merchandise near the reading window 208 of the merchandise reading unit 212.

Further, a merchandise placement table 203 for placing non-scanned merchandise that is taken out from the basket is provided on a right side of the main body 202, and a merchandise placement table 204 for placing scanned merchandise is provided on a left side of the main body 202. Further, a bag hook 205 for hooking a bag for putting the settled merchandise therein, and a temporary placement table 206 for temporarily placing the settled merchandise are provided. The merchandise placement tables 203 and 204 include, respectively, weight scales 207 and 208 to check whether or not the weights of merchandise before and after payment are same.

Further, a change unit 201 to receive bills for settlement and dispenses a change is provided in the main body 202 of the self-POS 200.

The self-POS 200 having such a configuration functions as the information processing apparatus of an embodiment. Here, a single apparatus that has functions of the POS terminal 30 and the merchandise reader 10 is not limited to the self-POS 200, and may be an apparatus having elements of the self-POS 200 except for the weight scales 207 and 208.

Incidentally, the programs executed by the merchandise reader 10 according to the above embodiment are provided as a non-transitory computer-readable recording medium such as a CD-ROM, a flexible disk (FD), a CD-R, a digital Versatile Disk (DVD) or the like as files of an installable format or an executable format.

Further, the program executed by the merchandise reader 10 according to the above embodiment may be provided from a computer connected to a network such as the Internet, and downloaded through the network. Further, the program executed by the merchandise reader 10 according to the above embodiment may be provided or distributed through a network such as the Internet.

Further, the programs executed by the merchandise reader 10 of the above embodiment may be provided stored in advance in a ROM or the like thereof.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. An image recognition system, comprising:
a data storage that stores, in association with each of a plurality of reference articles, a feature value calculated from an image of the reference article and a category group to which the reference article belongs;
an image capturing unit (24) configured to capture an image of an article to be identified;
a display (22),; and
a processor (11) configured to
calculate a feature value of the article to be identified, based on the captured image,
determine a top candidate based on a similarity level between the feature value of the article to be identified and each of the feature values of the reference articles,
select one or more reference articles that belong to a category group to which the top candidate belongs, as one or more candidates, and
control the display to display one or more objects corresponding to the one or more candidates, respectively.

2. The image recognition system according to claim 1, wherein
said one or more candidates include a first candidate that has a similarity level higher than a predetermined threshold and a second candidate that has a similarity level lower than the predetermined threshold, and
a format of the object corresponding to the first candidate is different from a format of the object corresponding to the second candidate.

3. The image recognition system according to claim 2, wherein
the format includes at least one of a color of the object, a framing of the object, a font of texts in the object, filling of the object, and an attachment mark.

4. The image recognition system according to any one of claims 1 to 3, wherein
a plurality of candidates are selected, and
a plurality of objects displayed on the display is sorted in a descending order of similarity levels of the corresponding candidates.

5. The image recognition system according to any one of claims 1 to 4, wherein
the data storage further stores, in association with each of the reference articles, a display position of an object corresponding to the reference article, and
each of said one or more objects is displayed at a display position associated with the corresponding reference article.

6. The image recognition system according to any one of claims 1 to 5, wherein
a plurality of tabs, each of which corresponding to a different category group, is also displayed on the display, and
one of the tabs that corresponding to the category group to which the top candidate belongs is displayed differently from the other tabs.

7. An image-based search method of one or more candidates for an article to be identified, comprising:
storing, in association with each of a plurality of reference articles, a feature value calculated from an image of the reference article and a category group to which the reference article belongs;
calculating a feature value of an article to be identified, based on a captured image thereof;
determining a top candidate based on a similarity level between the feature value of the article to be identified and each of the feature values of the reference articles; and
selecting one or more reference articles that belong to a category group to which the top candidate belongs, as one or more candidates.

8. The method according to claim 7, further comprising:
displaying, on a display, one or more objects corresponding to the one or more candidates, respectively.

9. The method according to claim 8, wherein
said one or more candidates include a first candidate that has a similarity level higher than a predetermined threshold and a second candidate that has a similarity level lower than the predetermined threshold, and
a format of the object corresponding to the first candidate is different from a format of the object corresponding to the second candidate.

10. The method according to claim 9, wherein
the format includes at least one of a color of the object, a framing of the object, a font of texts in the object, filling of the object, and an attachment mark.

11. The method according to claim 9 or 10, wherein
a plurality of candidates are selected, and
a plurality of objects displayed on the display is sorted in a descending order of similarity levels of the corresponding candidates.

12. The method according to any one of claims 9 to 11, further comprising:
storing, in association with each of the reference articles, a display position of an object corresponding to the reference article, wherein
each of said one or more objects is displayed at a display position associated with the corresponding reference article.

13. The method according to any one of claims 9 to 12, further comprising:
displaying, on the display, a plurality of tabs, each of which corresponding to a different category group, wherein
one of the tabs that corresponding to the category group to which the top candidate belongs is displayed differently from the other tabs.

14. A non-transitory computer readable medium comprising a program that is executable in a computing device to cause the computing device to perform an image-based search method according to any one of claims 7 to 13.
